# EUROPEAN PATENT SPECIFICATION

(11) **EP 3 315 235 B1**
(45) Date of publication and mention of the grant of the patent: **27.07.2022**
(21) Application number: 16196074.5
(22) Date of filing: 27.10.2016
(51) Int. Cl.: B23C 5/16

(54) **A CUTTING INSERT AND A MILLING TOOL**
SCHNEIDEINSATZ UND FRÄSWERKZEUG
INSERT DE DÉCOUPE ET OUTIL DE FRAISAGE

(43) Date of publication of application: 02.05.2018
(73) Proprietor: Pramet Tools, S.R.O., 787 53 Sumperk (CZ)
(72) Inventor: BITTNER, Jan, CZ-787 01 Sumperk (CZ); VLCEK, Jan, CZ-787 01 Sumperk (CZ)
(74) Representative: Sandvik

(56) References cited:
- WO-A1-96/29172
- US-A1- 2007 071 559
- US-A1- 2008 232 912
- US-A1- 2008 304 924
- US-A1- 2013 251 464

## Description

### FIELD OF THE INVENTION

The present invention relates to a cutting insert according to the preamble of claim 1. In particular, the invention relates to a cutting insert configured for chip-removing machining of a metallic workpiece by means of milling. The invention also relates to a milling tool according to the preamble of claim 15. The cutting insert and milling tool according to the invention are particularly suited for, but not limited to, contouring or copy milling operations, i.e. milling operations in which a surface contour is machined in a workpiece. More precisely, the cutting insert and milling tool are hereby with advantage used in a finishing operation, wherein a high surface finish on the machined surface is achieved by wiper edges being included on the cutting edge of the cutting insert. The cutting insert and milling tool may also be used for shoulder milling, ramping, die/mold machining, helical interpolation and plunge milling.

By a wiper edge is herein intended a cutting edge which is configured as a surface finishing cutting edge, generating a surface with relatively low surface roughness, either normal to or parallel with an axis of rotation of the milling tool.

### BACKGROUND AND PRIOR ART

EP1157768 describes a cutting insert and a milling tool intended to be used for finishing machining operations, plunge milling and three-dimensional cutting. The cutting insert is a single-sided positive indexable cutting insert having an upper side and a lower side connected by a side surface comprising a plurality of clearance surfaces. In a transition between the side surface and the upper side, two identical and alternately usable upper cutting edges extend. Each cutting edge comprises two chip-removing cutting edges that extend on opposite sides of a corner edge.

Between the corner edge and each of the chip-removing cutting edges, a sub-cutting edge or wiper edge for surface finishing extends. As seen in a top view of the cutting insert, the wiper edges form a substantially right angle and the chip-removing cutting edges form an acute angle. As seen in a side view of the insert, the chip-removing cutting edges are convex in shape and the wiper edges are linear in shape and formed in parallel to the lower side of the cutting insert.

A problem associated with the cutting insert according to EP1157768 is that the cutting performance at small and intermediate cutting depths is not optimal due to the shape of the cutting edges. The shape results in relatively large cutting forces that may give rise to vibrations during milling, in particular when milling with so called long tool overhangs. Avoiding vibrations is particularly important in surface finishing operations, as any vibrations during milling are obviously detrimental to the resulting surface finish.

US2013/251464, on which the preamble of claim 1 is based, shows a triangular cutting insert for square shoulder milling operations.

### SUMMARY OF THE INVENTION

It is a primary objective of the present invention to provide a versatile cutting insert and a milling tool with which it is possible to achieve a smooth finishing operation at small and intermediate cutting depths and which are particularly suitable for such smooth finishing operations in contouring or copy milling with long tool overhangs.

The primary objective is, according to a first aspect of the invention, achieved by means of the initially defined cutting insert, comprising:
- an upper side defining an upper extension plane and forming a rake surface;
- a lower side defining a lower extension plane parallel to the upper extension plane, wherein a centre axis extends perpendicularly through the upper extension plane and the lower extension plane;
- a side surface connecting the upper side and the lower side, the side surface comprising a plurality of clearance surfaces;
- at least two identical and alternately usable upper cutting edges extending in a transition between the side surface and the upper side, wherein each upper cutting edge comprises a chip removing major cutting edge and a minor cutting edge extending on opposite sides of a corner edge, a major wiper edge extending between the corner edge and the major cutting edge, and a minor wiper edge extending between the corner edge and the minor cutting edge,
wherein, as seen in a top view of the cutting insert, the major cutting edge and the major wiper edge form an obtuse inner angle of less than 180°, and as seen in a side view of the cutting insert, the major wiper edge slopes downward from the corner edge toward the major cutting edge, and the major cutting edge has a first portion sloping downward from the major wiper edge and a second portion extending in parallel or essentially in parallel with the upper extension plane. Furthermore, the upper side comprises a chip formation surface extending inside of and sloping downward from the cutting edges toward a lowest level of the chip formation surface, wherein a width of the chip formation surface is larger inside of the corner edges than inside of the major cutting edges.

Generally, the cutting insert according to the invention is very versatile and can be used for a number of different cutting operations. The major cutting edge becomes active at intermediate to large cutting depths and functions e.g. as an edge for contouring operations. The minor cutting edge becomes active in for instance ramping operations and helical interpolation. The major and minor wiper edges becomes active at small to intermediate cutting depths and are beneficially used for surface finishing of a vertical and a horizontal surface, respectively.

The major wiper edge is hereby positively inclined, i.e. sloping downward from the corner edge. The positive inclination of the major wiper edge not only reduces the cutting load, but more importantly it reduces the tendency for vibrations to arise during a finishing operation. In particular, the sloping major wiper edge is crucial for vibration free milling at long tool overhangs in surface finishing operations. The positive inclination of the major wiper edge further enables the cutting insert to be configured as a double-sided cutting insert, having cutting edges also around the lower side of the cutting insert, which is still capable of achieving finishing operations with smooth (vibration free) cutting performance. This is possible since the downward slope of the major wiper edge can provide the advantageous positive angle of inclination of this edge during milling, even when the double-sided cutting insert is mounted in the tool body at a negative axial tipping-in angle. Negative axial tipping-in angles are normally necessary with a double-sided cutting insert in order to provide axial clearance behind the surface generating minor cutting edge and/or minor wiper edge.

The positively sloping portion of the major cutting edge makes the transition between the major cutting edge and major wiper edge smooth, thereby preventing unnecessary deformation of chips. Furthermore, the edge line at a transition between the major cutting edge and the major wiper edge is not exposed to excessive heat and wear. Thanks to the positively sloping portion of the major cutting edge, the overall smooth cutting performance of the cutting insert is also improved.

Between the major cutting edge and the major wiper edge, a small radius transition edge is preferably provided as seen in a top view, such that the transition between the edges becomes smooth. In the same way, a small radius transition is preferably provided between the minor cutting edge and the minor wiper edge.

The inner angle formed between the major cutting edge and the major wiper edge is preferably larger than 170°.

The cutting insert according to the invention preferably has two or three cutting edges distributed around the upper side, i.e. the upper side comprises two or three identical and alternately usable upper cutting edges.

According to one embodiment of the invention, as seen in a top view, the major wiper edge and the minor wiper edge form an inner angle of more than 90°. The inner angle formed between the major wiper edge and the minor wiper edge is preferably not more than 95°. This allows creating orthogonal horizontal and vertical surfaces on the workpiece with high surface quality.

According to one embodiment of the invention, as seen in a top view, the major cutting edge and the minor cutting edge form an acute inner angle, preferably of less than 85°. The inner angle formed between the major cutting edge and the minor cutting edge is preferably larger than 75°.

According to one embodiment of the invention, as seen in a side view, the major wiper edge has a linear or concave shape. The linear or concave shape is beneficial for providing a relatively large positive inclination for reducing both cutting loads and the tendency for vibrations to arise during finishing operations.

According to one embodiment of the invention, the clearance surfaces extending from and below the major cutting edge, the minor cutting edge, the major wiper edge and the minor wiper edge, respectively, are flat surfaces extending in parallel with the centre axis. The cutting insert is thereby formed with a negative cutting geometry for achieving a double-sided cutting insert, which is easy to manufacture since pressing of the cutting insert is facilitated. The flat clearance surfaces are also easy to grind for improving the precision when the cutting insert is mounted in an insert seat of a tool body. This is also beneficial since the clearance surfaces form relatively large and stable side support surfaces for the cutting insert.

According to one embodiment of the invention, the corner edge has a downward sloping portion such that a smooth transition is formed between the corner edge and the major wiper edge as seen in a side view. This further enhances the smooth (vibration free) cutting performance. The harmonic transition between the corner edge and the major wiper edge also contributes to improved tool performance and prolonged tool life.

According to one embodiment of the invention, as seen in a side view, the major wiper edge and the upper extension plane form an angle of between 10° and 20°. The positive inclination angle within this angular interval ensures a smooth cutting action. The angle should be measured as seen in a side view from a direction normal to the clearance surface below the major wiper edge.

According to one embodiment of the invention, said first portion of the major cutting edge extends at the same angle with respect to the upper extension plane as the major wiper edge. As a result, unnecessary chip deformation is avoided as well as exposure of the cutting edge to heat and wear in the transition between the major cutting edge and the major wiper edge. Smooth cutting action and high component quality are achieved.

According to one embodiment of the invention, as seen in a top view, the minor cutting edge and the minor wiper edge form an obtuse inner angle of less than 180°. The minor wiper edge can thereby be used for surface finishing machining while the minor cutting edge is non-active, thereby creating a high quality surface on the workpiece. The minor cutting edge is instead only active in ramping, plunge milling, helical milling and similar.

According to one embodiment of the invention, the minor wiper edge extends in parallel or essentially in parallel with the upper extension plane. Essentially in parallel is here to be understood as deviating by less than ±2° from the upper extension plane. The minor wiper edge will hereby be strong and chip evacuation will be facilitated.

According to one embodiment of the invention, the minor cutting edge extends in parallel or essentially in parallel with the upper extension plane. Essentially in parallel is here to be understood as deviating by less than ±2° from the upper extension plane. For a cutting insert having three upper cutting edges, this makes it possible to form a chip formation surface that has an elevated portion in a region located between the active minor cutting edge and an inactive adjacent major cutting edge. The elevated portion of the chip surface creates a barrier directing chips away from the inactive cutting edges.

According to one embodiment of the invention, the minor wiper edge slopes downward from the corner edge toward the minor cutting edge. The sloping minor wiper edge contributes to a smooth cutting in surface finishing operations.

According to one embodiment of the invention, the minor cutting edge, as seen in a side view, has a first portion sloping downward from the minor wiper edge, and a second portion which extends in parallel or essentially in parallel with the upper extension plane. A smooth transition between the minor cutting edge and the minor wiper edge is thereby provided.

According to one embodiment of the invention, the upper side comprises a top support surface located above the cutting edges.

For a double-sided cutting insert, an insert seat in a milling tool in which the cutting insert is to be mounted can thereby be made with a less complicated shape than if the support surface is located below the cutting edges. The cutting insert can also be made with a smaller height as measured in the axial direction of the cutting insert. The elevated support surface is also possible to grind and therefore enables more precise contact of the cutting insert and a support surface in an insert seat of the milling tool.

According to the invention, the upper side comprises a chip formation surface extending inside of and sloping downward from the cutting edges toward a lowest level of the chip formation surface, wherein a width of the chip formation surface is larger inside of the corner edges than inside of the major cutting edges. The width is herein measured normal to the cutting edge. The milling insert is with this design tailored for surface finishing operations and small cutting depths.

According to one embodiment of the invention, the width of the chip formation surface decreases gradually from a bisector of the corner edge toward the major cutting edge. The chip formation surface is thereby wider at the cutting depths which are mostly used, i.e. inside the corner edge and the major wiper edge, while, for a double-sided cutting insert, the support surfaces for supporting the cutting insert in the insert seat can be made as large as possible.

According to one embodiment of the invention, the cutting insert is double-sided with at least two identical and alternately usable lower cutting edges identical to the corresponding upper cutting edges extending in a transition between the side surface and the lower side. The upper and lower sides may be identical except for marks identifying e.g. the different index positions. This doubles the number of cutting edges and thus prolongs the tool life of the cutting insert significantly.

According to another aspect of the invention, at least the primary objective is achieved by the initially defined milling tool comprising at least one proposed cutting insert detachably mounted in the at least one insert seat. Advantages and advantageous features of such a milling tool appear from the above description of the proposed cutting insert.

Further advantageous features and advantages of the invention will appear from the following detailed description.

### BRIEF DESCRIPTION OF THE DRAWINGS

The invention will in the following be described by means of example with reference to the appended drawings, in which:
- Fig. 1: is a side view of a milling tool according to a first embodiment of the invention,
- Fig. 2: is an exploded view of the milling tool in fig. 1,
- Fig. 3: is a side view of a milling tool according to a second embodiment of the invention,
- Fig. 4: is a perspective view of a cutting insert according to a first embodiment,
- Fig. 5: is a side view of the cutting insert in fig. 4,
- Fig. 6: is a top view of the cutting insert in fig. 4,
- Fig. 7: is a side view from the line VII-VII in fig. 6,
- Fig. 8a-c: are cross sections along the lines VIIIa, VIIIb, and Vlllc in fig. 6, respectively,
- Fig. 9: is a perspective view of a cutting insert according to a second embodiment,
- Fig. 10: is a side view of the cutting insert in fig. 9,
- Fig. 11: is a top view of the cutting insert in fig. 9,
- Fig. 12: is a side view from the line XII-XII in fig. 11,
- Fig. 13a-d are: cross sections along the lines XIIIa, XIIIb, XIIIc, and XIIId in fig. 11, respectively,
- Fig. 14: is a perspective view of a cutting insert according to a third embodiment,
- Fig. 15: is a side view of the cutting insert in fig. 14,
- Fig. 16: is a top view of the cutting insert in fig. 14, and
- Fig. 17: is a side view from the line XVII-XVII in fig. 16.

### DETAILED DESCRIPTION OF EMBODIMENTS OF THE INVENTION

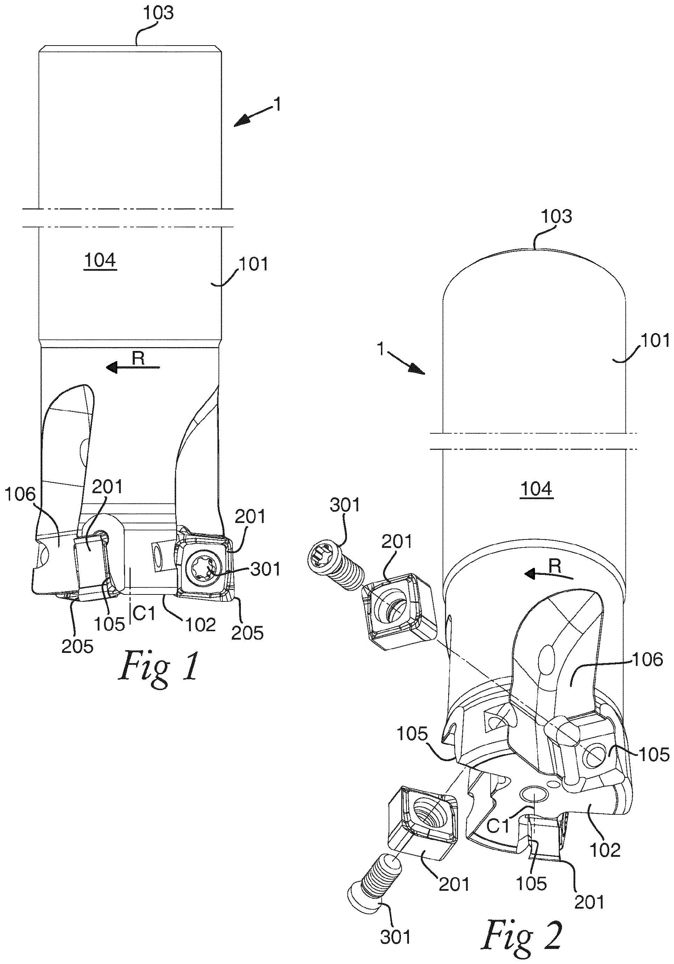

A milling tool 1 according to an embodiment of the invention is shown in figs. 1-2. The milling tool 1 is rotatable in a direction of rotation R around a central rotation axis C1. A tool body 101 of the milling tool 1 includes a front end 102 and a rear end 103 between which an envelope surface 104 extends. At the rear end 103, the milling tool 1 is configured to engage with a spindle of a machine (not shown) and in a transition between the front end 102 and the envelope surface 104, three insert seats 105 are formed. In front of each insert seat 105, as seen in the direction of rotation of the tool, a chip pocket 106 is provided. A double-sided negative cutting insert 201 is detachably mounted in each insert seat 106 by means of a screw 301. The cutting inserts 201 are mounted at a negative axial tipping-in angle, i.e. inclined in relation to the axial direction defined by the central rotation axis in order to provide axial clearance for the double-sided negative cutting insert.

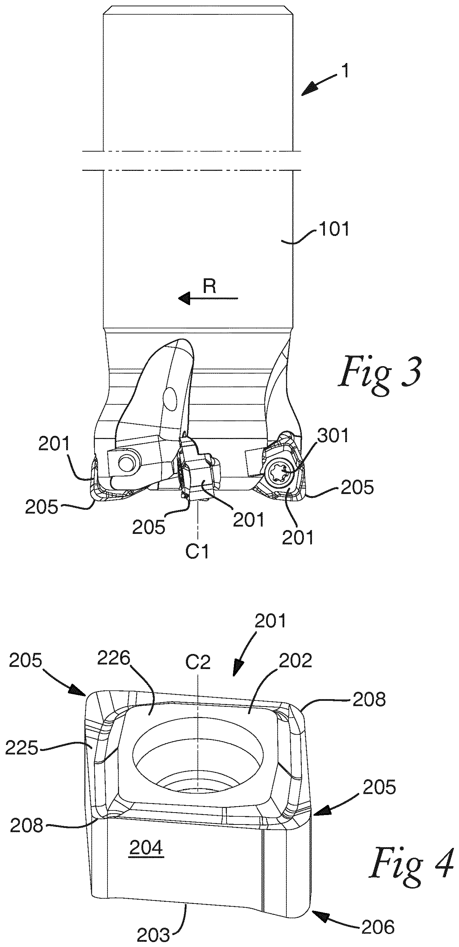

A milling tool 1 according to a second embodiment of the invention is shown in fig. 3. This milling tool 1 differs from the milling tool shown in figs. 1-2 in the design of the cutting inserts 201 mounted in the tool body 101. The cutting inserts 201 are in this embodiment trigonal in shape. Furthermore, the tool body 101 in this embodiment has four cutting inserts 201 mounted in the tool body 101 by means of screws 301. The milling tool 1 can be used e.g. for contouring or copy milling, shoulder milling, ramping, die/mold machining, helical interpolation and plunge milling. Different portions of the cutting edge 205 become active at different cutting depths. The milling tools 1 shown in figs. 1-3 are particularly suitable for surface finishing operations with low to medium cutting depths.

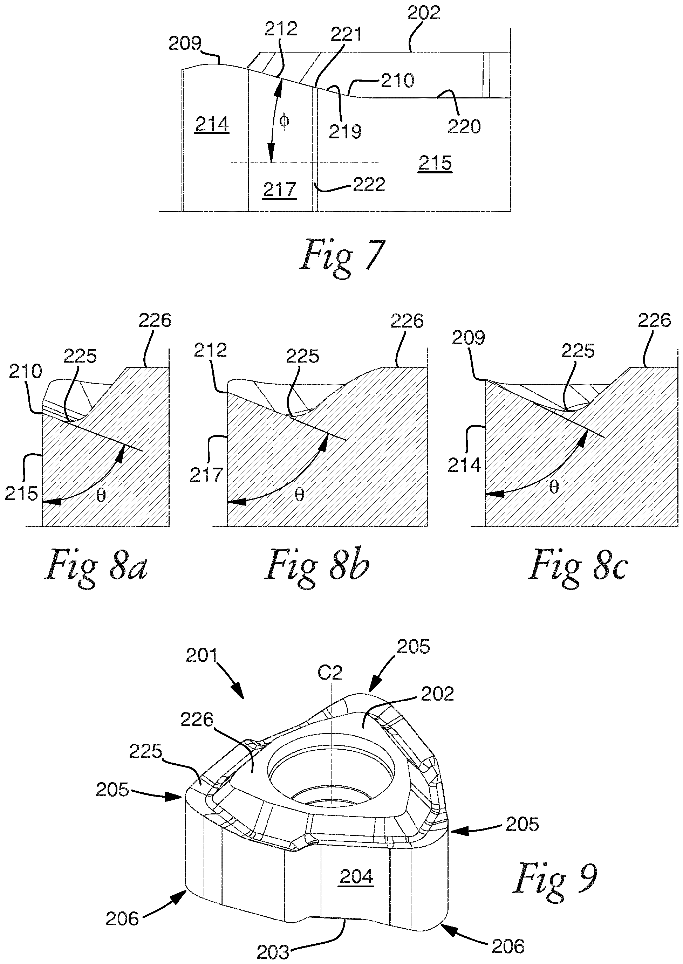

Figs. 4-6 show a double-sided negative cutting insert 201 mounted in the milling tool 1 according to the first embodiment in closer detail and figs. 9-11 show a double-sided negative cutting insert 201 mounted in the milling tool 1 according to the second embodiment in closer detail. For ease of reference, the same reference numerals have been used to designate corresponding features in both embodiments.

The cutting insert 201 has in the first embodiment an upper side 202 with the basic shape of a parallelogram, defining an upper extension plane P_{U}. A lower side 203 of the cutting insert 201 defines a lower extension plane P_{L} parallel to the upper extension plane P_{U}. A centre axis C2 extends perpendicularly through the extension planes P_{U}, P_{L}. A side surface 204 connects the upper side 202 and the lower side 203. In a transition between the upper side 202 and the side surface 204, two identical and alternately usable upper cutting edges 205 extend in two corner regions of the cutting insert 201. Likewise, two identical and alternately usable lower cutting edges 206 extend between the lower side 203 and the side surface 204. The cutting insert 201 is in figs. 1-2 mounted in the insert seat 105 with a support surface 207 on its lower side 203 abutting a bottom contact surface of the insert seat 105. One of the upper cutting edges 205 in this case becomes an active chip-removing cutting edge, while the remaining cutting edges are inactive in a milling operation. The upper side 202 thereby forms a rake surface. On each of the upper side 202 and the lower side 203, two corner regions 208 do not comprise cutting edges.

The cutting insert 201 according to the second embodiment shown in figs. 9-11 has, similarly to the first embodiment, an upper side 202 defining an upper extension plane P_{U}, a lower side 203 defining a lower extension plane P_{L}, and a centre axis C2 extending perpendicularly through the extension planes P_{U}, P_{L}. In a transition between the upper side 202 and a side surface 204, three identical and alternately usable upper cutting edges 205 extend. Likewise, three identical and alternately usable lower cutting edges 206 extend between the lower side 203 and the side surface 204. When mounted as shown in fig. 3, with a support surface 207 abutting a bottom contact surface of the insert seat 105, a first one of the upper cutting edges 205 becomes an active chip-removing cutting edge, while the remaining cutting edges are inactive in a milling operation.

Since the upper side 202 and the lower side 203 are identical in both embodiments, only the upper side 202 will be discussed in detail.

In both embodiments, each upper cutting edge 205 comprises a corner edge 209. On opposite sides of the corner edge 209, a chip removing major cutting edge 210 and a minor cutting edge 211 extend. A major wiper edge 212 extends between the corner edge 209 and the major cutting edge 210. A minor wiper edge 213 extends between the corner edge 209 and the minor cutting edge 211. Below each one of the edges 209-213, a clearance surface 214-218, forming part of the side surface 204, extends in parallel with the centre axis C2. The clearance surfaces 215-218 extending below the major cutting edge 210, the minor cutting edge 211, the major wiper edge 212, and the minor wiper edge 213 are all flat surfaces.

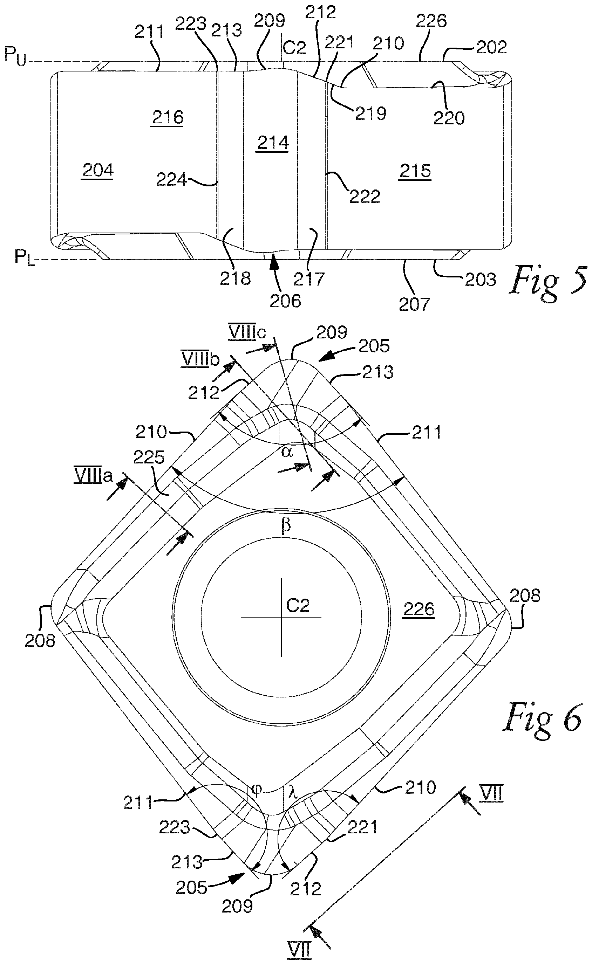

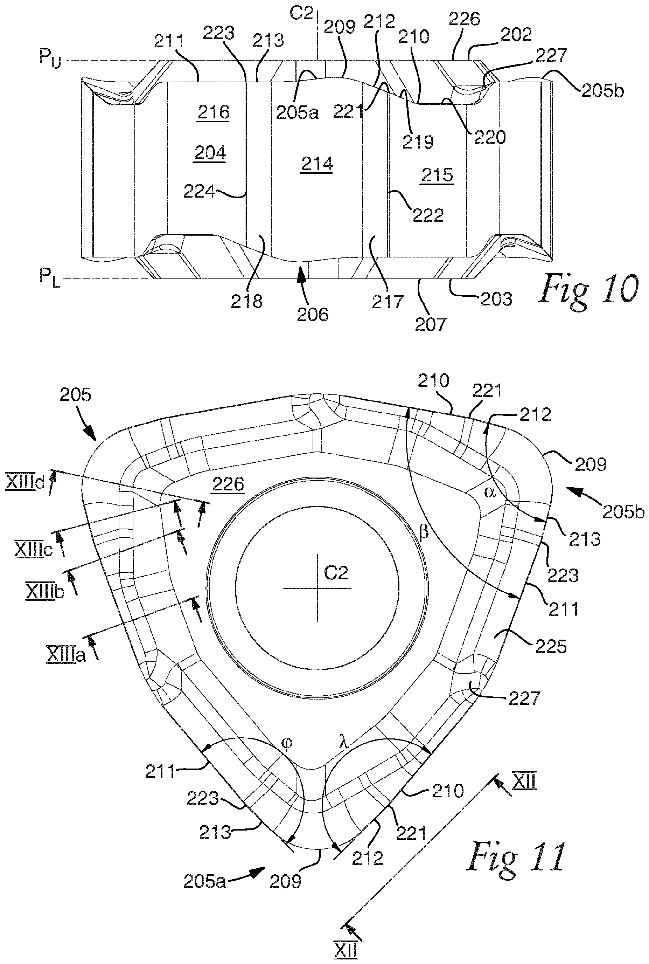

As seen in a top view such as in figs. 6 and fig. 11 for the first and second embodiments respectively, the major wiper edge 212 and the minor wiper edge 213 forms an obtuse inner angle α. In the first embodiment, the inner angle α is approximately 91°, and in the second embodiment, the inner angle α is approximately 91°. The major cutting edge 210 and the minor cutting edge 211 form an inner angle β of less than 85°; in both the first and the second embodiment β = 80°. The major cutting edge 210 and the major wiper edge 212 form an obtuse inner angle A of less than 180°. In the first embodiment λ ≈ 174° and in the second embodiment, A ≈ 175°. The minor cutting edge 211 and the minor wiper edge 213 form an obtuse inner angle ϕ of less than 180°. In the first embodiment, ϕ ≈ 174° and in the second embodiment, ϕ ≈ 175°.

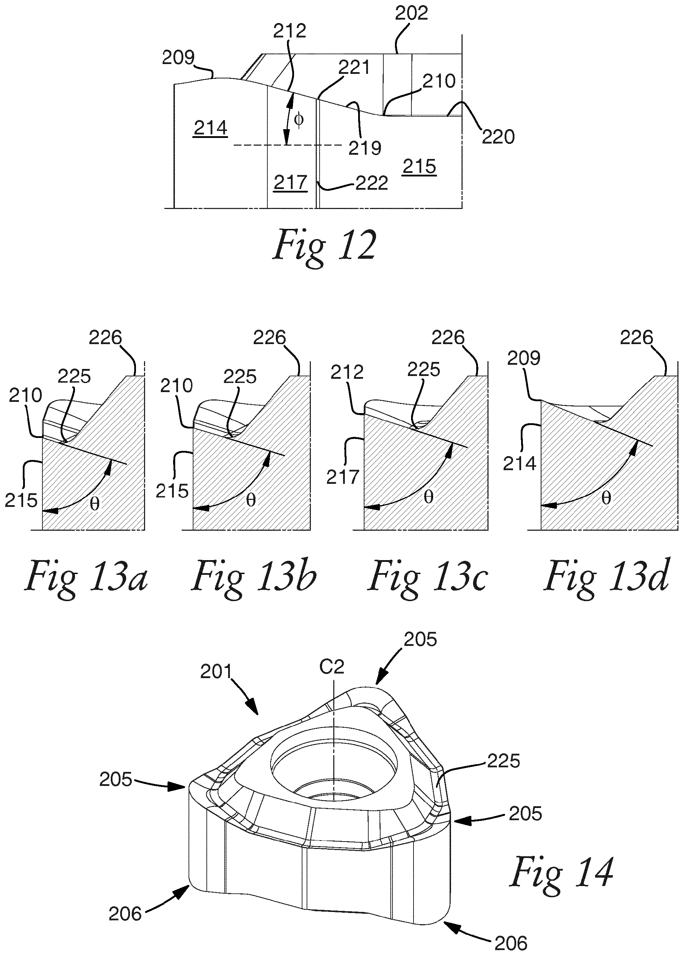

As seen in a side view such as in figs. 7 and 12, respectively, the major wiper edge 212 has in both embodiments a linear shape and slopes downward from the corner edge 209 toward the major cutting edge 210 at an angle φ of approximately 15° with respect to the upper extension plane Pu. The major cutting edge 210 has a first portion 219 sloping downward from the major wiper edge 212, at the same angle φ with respect to the upper extension plane Pu as the major wiper edge 212. The major cutting edge 210 has a second portion 220 which extends in parallel or essentially in parallel with the upper extension plane P_{U}. As seen in a top view, the portions 219, 220 extend in the same direction.

Between the major cutting edge 210 and the major wiper edge 212, a transition edge 221 having a radius of curvature is located. A narrow curved clearance surface 222 extends below this transition edge 221. Also between the minor cutting edge 211 and the minor wiper edge 213, a similar curved transition edge 223 is provided below which a narrow curved clearance surface 224 is formed. The minor cutting edge 211 and the minor wiper edge 213 are both linear and extend in parallel with the upper extension plane P_{U}.

The corner edge 209 is in both embodiments curved as seen both in a side view and in a top view. As seen in a side view, the corner edge 209 comprises the highest point of the cutting edge 205. In the first embodiment shown in figs. 4-6, the highest point is located in the vicinity of a bisector dividing the cutting insert into two identical halves, between the bisector and the major wiper edge 212. On each side of the highest point, the corner edge 209 slopes downward toward the major wiper edge 212 and the minor wiper edge 213, respectively. Also in the second embodiment, the corner edge 209 slopes downward from the highest point toward the major wiper edge 212 and the minor wiper edge 213, respectively.

A chip formation surface 225 is in both embodiments formed on the upper side 202, inside of the upper cutting edges 205. The chip formation surface 225 is formed as a ditch and slopes downward from the cutting edges 205 toward a lowest level of the chip formation surface 225 at an angle θ with respect to the centre axis C2 that varies along the cutting edge 205 as shown in figs. 8a-c for the first embodiment and in figs. 13a-d for the second embodiment. In the first embodiment, the angle θ is about 69° inside of the major cutting edge 210, 68° inside of the major wiper edge 212, and 64° inside the corner edge 209. In the second embodiment, the angle θ is about 73° inside of the major cutting edge 210, 72° inside of the major wiper edge 212, and 68° inside the corner edge 209. Inside of the lowest level of the chip formation surface 225, the surface slopes in both embodiments upward toward a support surface 226 located at a higher level than the upper cutting edges 205. A width of the chip formation surface 225 as measured perpendicularly to the cutting edge 205 is larger inside of the corner edge 209 than inside of the major and minor cutting edges 210, 211. Along the major cutting edge 210, the width of the chip formation surface 225 decreases gradually when moving away from the corner edge 209.

In the second embodiment, a barrier 227 is formed in an area between the major cutting edge 210 of a first cutting edge 205a and an adjacent minor cutting edge 211 of a second cutting edge 205b. As the first cutting edge 205a is active, the barrier 227 serves to direct chips away from the adjacent cutting edge 205b, thus protecting the second cutting edge 205b from damage. In this area, there is a transition between the first major cutting edge 210 of the cutting edge 205a, located at a relatively low level, and the second minor cutting edge 211 of the cutting edge 205b, located at a relatively high level.

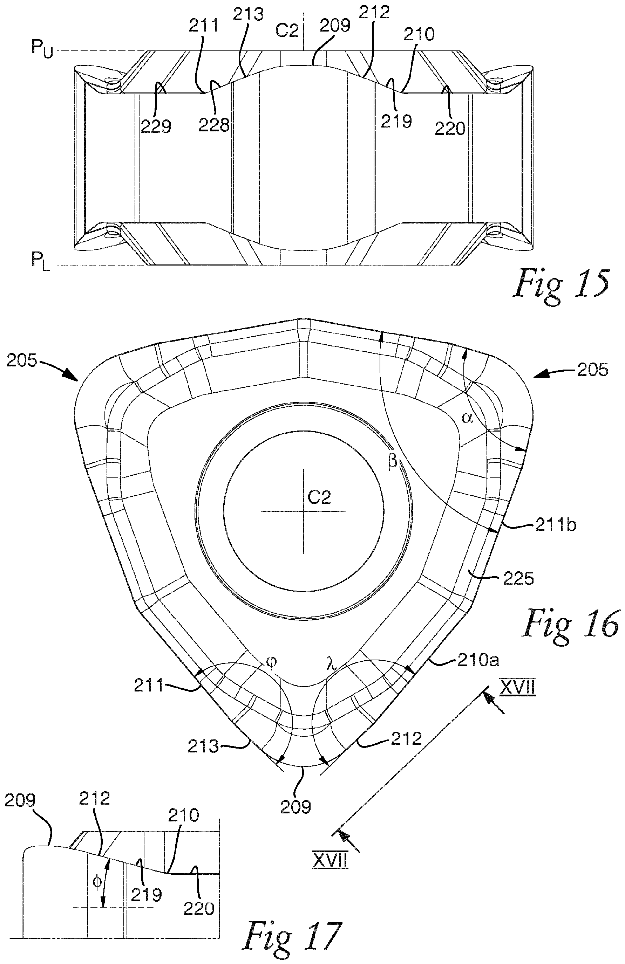

In a third embodiment shown in figs. 14-16, the cutting insert 201 is similar to the cutting insert according to the second embodiment. The cutting insert 201 according to the third embodiment has three upper cutting edges 205 and three lower cutting edges 206, each having a corner edge 209, a major cutting edge 210, a minor cutting edge 211, a major wiper edge 212, and a minor wiper edge 213. It differs from the second embodiment in the design of the minor cutting edge 211 and the minor wiper edge 213 and in the design of the chip formation surface. In this embodiment, the minor wiper edge 213 has a linear shape and slopes downward from the corner edge 209 toward the minor cutting edge 211 at an angle similar to the angle φ with which the major wiper edge 212 slopes (see fig. 17). The minor cutting edge 211 has a first portion 228, similar to a first portion 219 of the major cutting edge 210, sloping downward from the minor wiper edge 213 at the same angle with respect to the upper extension plane Pu as the minor wiper edge 213. The minor cutting edge 211 further has a second portion 229, similar to a second portion 220 of the major cutting edge 210, which extends in parallel or essentially in parallel with the upper extension plane P_{U}. As seen in a top view, the portions 228, 229 extend in parallel.

Since an active first major cutting edge 210a and a non-active second minor cutting edge 211b in the third embodiment have second portions 220, 229 extending at the same level with respect to the upper extension plane P_{U}, a chip formation surface 225 is in the third embodiment formed without a barrier between the first major cutting edge 210a and the second minor cutting edge 211b.

In the third embodiment, the inner angle α formed between the major wiper edge 212 and the minor wiper edge 213 is approximately 93°, and the inner angle β formed between the major cutting edge 210 and the minor cutting edge 211 is approximately 80°. The inner angle A formed between the major cutting edge 210 and the major wiper edge 212 is approximately 174°, and the inner angle ϕ formed between the minor cutting edge 211 and the minor wiper edge 213 is approximately 174°.

It is possible to provide the cutting insert according to the first embodiment with features similar to the third embodiment, i.e. with a minor wiper edge that is sloping downward from the corner edge toward the minor cutting edge, and with a minor cutting edge that has a sloping first portion and a second portion that extends in parallel or essentially in parallel with the upper extension plane.

The invention is of course not limited to the embodiments disclosed, but may be varied and modified within the scope of the following claims. For example, the number of insert seats of the tool body may be varied. Instead of screws, other fastening members can be used for mounting the cutting inserts in the tool body, such as e.g. clamping members.

## Claims

1. An indexable cutting insert (201) for a milling tool (1), the cutting insert (201) comprising:
- an upper side (202) defining an upper extension plane (P_{U}) and forming a rake surface;
- a lower side (203) defining a lower extension plane (P_{L}) parallel to the upper extension plane (P_{U}), wherein a centre axis (C2) extends perpendicularly through the upper extension plane (P_{U}) and the lower extension plane (P_{L});
- a side surface (204) connecting the upper side (202) and the lower side (203), the side surface (204) comprising a plurality of clearance surfaces (214-218, 222, 224);
- at least two identical and alternately usable upper cutting edges (205) extending in a transition between the side surface (204) and the upper side (202), wherein each upper cutting edge (205) comprises a chip removing major cutting edge (210) and a minor cutting edge (211) extending on opposite sides of a corner edge (209), a major wiper edge (212) extending between the corner edge (209) and the major cutting edge (210), and a minor wiper edge (213) extending between the corner edge (209) and the minor cutting edge (211),
wherein, as seen in a top view, the major cutting edge (210) and the major wiper edge (212) form an obtuse inner angle (λ) of less than 180°,
wherein, as seen in a side view,
- the major wiper edge (212) slopes downward from the corner edge (209) toward the major cutting edge (210); and
- the major cutting edge (210) has a first portion (219) sloping downward from the major wiper edge (212) and a second portion (220) which extends in parallel or essentially in parallel with the upper extension plane (P_{U}),
***characterised in***
**that** the upper side (202) comprises a chip formation surface (225) extending inside of and sloping downward from the cutting edges (205) toward a lowest level of the chip formation surface (225), wherein a width of the chip formation surface (225) is larger inside of the corner edges (209) than inside of the major cutting edges (210) .

2. The cutting insert according to claim 1, wherein, as seen in a top view, the major wiper edge (212) and the minor wiper edge (213) form an inner angle (α) of more than 90°.

3. The cutting insert according to claim 1 or 2, wherein, as seen in a top view, the major cutting edge (210) and the minor cutting edge (211) form an acute inner angle (β), preferably of less than 85°.

4. The cutting insert according to any one of the preceding claims, wherein, as seen in a side view, the major wiper edge (212) has a linear or concave shape.

5. The cutting insert according to any one of the preceding claims, wherein the clearance surfaces (215, 216, 217, 218) extending from and below the major cutting edge (210), the minor cutting edge (211), the major wiper edge (212) and the minor wiper edge (213), respectively, are flat surfaces extending in parallel with the centre axis (C2).

6. The cutting insert according to any one of the preceding claims, wherein the corner edge (209) has a downward sloping portion such that a smooth transition is formed between the corner edge (209) and the major wiper edge (212) as seen in a side view.

7. The cutting insert according to any one of the preceding claims, wherein, as seen in a side view, the major wiper edge (212) and the upper extension plane (P_{U}) form an angle of between 10° and 20°.

8. The cutting insert according to any one of the preceding claims, wherein said first portion (219) of the major cutting edge (210) extends at the same angle with respect to the upper extension plane (P_{U}) as the major wiper edge (212).

9. The cutting insert according to any one of the preceding claims, wherein, as seen in a top view, the minor cutting edge (211) and the minor wiper edge (213) form an obtuse inner angle (ϕ) of less than 180°.

10. The cutting insert according to any one of the preceding claims, wherein the minor wiper edge (213) extends in parallel or essentially in parallel with the upper extension plane (P_{U}), preferably wherein the minor cutting edge (211) extends in parallel or essentially in parallel with the upper extension plane (P_{U}).

11. The cutting insert according to any one of claims 1-9, wherein the minor wiper edge (213) slopes downward from the corner edge (209) toward the minor cutting edge (211), preferably wherein the minor cutting edge (211), as seen in a side view, has a first portion (228) sloping downward from the minor wiper edge (213), and a second portion (229) which extends in parallel or essentially in parallel with the upper extension plane (P_{U}).

12. The cutting insert according to any one of the preceding claims, wherein the upper side (202) comprises a top support surface (226) located above the cutting edges (205).

13. The cutting insert according to any one of the preceding claims, wherein the width of the chip formation surface (225) decreases gradually from a bisector of the corner edge (209) toward the major cutting edge (210).

14. The cutting insert according to any one of the preceding claims, wherein the cutting insert (201) is double-sided with at least two identical and alternately usable lower cutting edges (206) identical to the corresponding upper cutting edges (205) extending in a transition between the side surface (204) and the lower side (203).

15. A milling tool (1) configured for chip-removing machining comprising a tool body (101) including a front end (102) and a rear end (103), between which a central rotation axis (C1) extends around which the tool (1) is rotatable in a direction of rotation (R), and at least one insert seat (105) being formed in a transition between the front end (102) and an envelope surface (104) extending between the front end (102) and the rear end (103) of the tool body (101), wherein a chip pocket (106) is provided in front of the at least one insert seat (105) in the direction of rotation (R) of the tool (1);
***characterised in***
**that** the tool (1) comprises at least one cutting insert (201) according to any of the preceding claims detachably mounted in the at least one insert seat (105).

## Patentansprüche

1. Wendeschneideinsatz (201) für ein Fräswerkzeug (1), wobei der Schneideinsatz (201) Folgendes aufweist:
- eine Oberseite (202), die eine obere Erstreckungsebene (P_{U}) definiert und eine Spanfläche bildet,
- eine Unterseite (203), die eine untere Erstreckungsebene (P_{L}) parallel zur oberen Erstreckungsebene (P_{U}) definiert, wobei sich eine zentrale Achse (C2) senkrecht durch die obere Erstreckungsebene (P_{U}) und die untere Erstreckungsebene (P_{L}) erstreckt,
- eine Seitenfläche (204), die die obere Seite (202) und die untere Seite (203) verbindet, wobei die Seitenfläche (204) eine Mehrzahl von Freiflächen (214-218, 222, 224) aufweist,
- wenigstens zwei identische und abwechselnd verwendbare obere Schneidkanten (205), die sich an einem Übergang zwischen der Seitenfläche (204) und der Oberseite (202) erstrecken, wobei jede obere Schneidkante (205) eine spanabhebende Hauptschneidkante (210) und eine Nebenschneidkante (211), die sich auf gegenüberliegenden Seiten einer Eckkante (209) erstrecken, eine Hauptabstreifkante (212), die sich zwischen der Eckkante (209) und der Hauptschneidkante (210) erstreckt, und eine Nebenabstreifkante (213), die sich zwischen der Eckkante (209) und der Nebenschneidkante (211) erstreckt, aufweist,
wobei, in einer Ansicht von oben gesehen, die Hauptschneidkante (210) und die Hauptabstreifkante (212) einen stumpfen Innenwinkel (λ) von weniger als 180° bilden,
wobei, in einer Seitenansicht gesehen,
- die Hauptabstreifkante (212) von der Eckkante (209) in Richtung der Hauptschneidkante (210) abfällt, und
- die Hauptschneidkante (210) einen ersten Abschnitt (219) aufweist, der von der Hauptabstreifkante (212) nach unten abfällt, und einen zweiten Abschnitt (220), der sich parallel oder im Wesentlichen parallel zu der oberen Erstreckungsebene (P_{U}) erstreckt,
**dadurch gekennzeichnet, dass**
dass die Oberseite (202) eine Spanbildungsfläche (225) aufweist, die sich innerhalb der Schneidkanten (205) erstreckt und von diesen nach unten zu einer untersten Ebene der Spanbildungsfläche (225) hin abfällt, wobei eine Breite der Spanbildungsfläche (225) innerhalb der Eckkanten (209) größer ist als innerhalb der Hauptschneidkanten (210).

2. Schneideinsatz nach Anspruch 1, wobei in einer Ansicht von oben die Hauptabstreifkante (212) und die Nebenabstreifkante (213) einen Innenwinkel (α) von mehr als 90° bilden.

3. Schneideinsatz nach Anspruch 1 oder 2, wobei in einer Ansicht von oben die Hauptschneidkante (210) und die Nebenschneidkante (211) einen spitzen Innenwinkel (β), vorzugsweise von weniger als 85°, bilden.

4. Schneideinsatz nach einem der vorangehenden Ansprüche, wobei die Hauptabstreifkante (212) in einer Seitenansicht gesehen eine lineare oder konkave Form aufweist.

5. Schneideinsatz nach einem der vorangehenden Ansprüche, wobei die Freiflächen (215, 216, 217, 218) die sich jeweils von und unterhalb der Hauptschneidkante (210), der Nebenschneidkante (211), der Hauptabstreifkante (212) und der Nebenabstreifkante (213) erstrecken, ebene Flächen sind, die sich parallel zur zentralen Achse (C2) erstrecken.

6. Schneideinsatz nach einem der vorangehenden Ansprüche, wobei die Eckkante (209) einen nach unten abfallenden Abschnitt aufweist, so dass in einer Seitenansicht gesehen ein sanfter Übergang zwischen der Eckkante (209) und der Hauptabstreifkante (212) gebildet wird.

7. Schneideinsatz nach einem der vorangehenden Ansprüche, wobei in einer Seitenansicht die Hauptabstreifkante (212) und die obere Erstreckungsebene (P_{U}) einen Winkel von zwischen 10° und 20° bilden.

8. Schneideinsatz nach einem der vorangehenden Ansprüche, wobei sich der erste Abschnitt (219) der Hauptschneidkante (210) in Bezug auf die obere Erstreckungsebene (P_{U}) in demselben Winkel wie die Hauptabstreifkante (212) erstreckt.

9. Schneideinsatz nach einem der vorangehenden Ansprüche, wobei die Nebenschneidkante (211) und die Nebenabstreifkante (213) in einer Ansicht von oben einen stumpfen Innenwinkel (ϕ) von weniger als 180° bilden.

10. Schneideinsatz nach einem der vorangehenden Ansprüche, wobei sich die Nebenabstreifkante (213) parallel oder im Wesentlichen parallel zur oberen Erstreckungsebene (P_{U}) erstreckt, wobei sich vorzugsweise die Nebenschneidkante (211) parallel oder im Wesentlichen parallel zur oberen Erstreckungsebene (Pu) erstreckt.

11. Schneideinsatz nach einem der Ansprüche 1-9, wobei die Nebenabstreifkante (213) von der Eckkante (209) in Richtung der Nebenschneidkante (211) abfällt, wobei vorzugsweise die Nebenschneidkante (211), in einer Seitenansicht gesehen, einen ersten Abschnitt (228) aufweist, der von der Nebenabstreifkante (213) nach unten abfällt, und einen zweiten Abschnitt (229), der sich parallel oder im Wesentlichen parallel zu der oberen Erstreckungsebene (P_{U}) erstreckt.

12. Schneideinsatz nach einem der vorangehenden Ansprüche, wobei die Oberseite (202) eine obere Stützfläche (226) aufweist, die oberhalb der Schneidkanten (205) angeordnet ist.

13. Schneideinsatz nach einem der vorangehenden Ansprüche, wobei die Breite der Spanbildungsfläche (225) von einer Winkelhalbierenden der Eckkante (209) in Richtung der Hauptschneidkante (210) allmählich abnimmt.

14. Schneideinsatz nach einem der vorangehenden Ansprüche, wobei der Schneideinsatz (201) beidseitig mit wenigstens zwei identischen und abwechselnd nutzbaren unteren Schneidkanten (206) ist, die mit den entsprechenden oberen Schneidkanten (205) identisch sind und sich an einem Übergang zwischen der Seitenfläche (204) und der Unterseite (203) erstrecken.

15. Fräswerkzeug (1), das für die spanabhebende Bearbeitung eingerichtet ist, mit einem Werkzeugkörper (101), der ein vorderes Ende (102) und ein hinteres Ende (103) aufweist, zwischen denen sich eine zentrale Rotationsachse (C1) erstreckt, um die das Werkzeug (1) in einer Rotationsrichtung (R) rotierbar ist, und mit wenigstens einem Einsatzsitz (105), der an einem Übergang zwischen dem vorderen Ende (102) und einer sich zwischen dem vorderen Ende (102) und dem hinteren Ende (103) des Werkzeugkörpers (101) erstreckenden Mantelfläche (104) ausgebildet ist, wobei in der Rotationsrichtung (R) des Werkzeugs (1) vor dem wenigstens einen Einsatzsitz (105) eine Spantasche (106) vorgesehen ist,
**dadurch gekennzeichnet, dass**
das Werkzeug (1) wenigstens einen Schneideinsatz (201) nach einem der vorangehenden Ansprüche aufweist, der lösbar in dem wenigstens einen Einsatzsitz (105) angeordnet ist.

## Revendications

1. Plaquette de coupe repositionnable (201) destinée à un outil de fraisage (1), la plaquette de coupe (201) comprenant :
- un côté supérieur (202) définissant un plan d'extension supérieur (P_{U}) et formant une surface d'attaque ;
- un côté inférieur (203) définissant un plan d'extension inférieur (P_{L}) parallèle au plan d'extension supérieur (P_{U}), où un axe central (C2) s'étend perpendiculairement à travers le plan d'extension supérieur (P_{U}) et le plan d'extension inférieur (P_{L}) ;
- une surface latérale (204) reliant le côté supérieur (202) et le côté inférieur (203), la surface latérale (204) comprenant une pluralité de surfaces de dépouille (214-218, 222, 224);
- au moins deux arêtes de coupe supérieures identiques et utilisables en alternance (205) s'étendant dans une transition entre la surface latérale (204) et le côté supérieur (202), où chaque arête de coupe supérieure (205) comprend une arête de coupe principale d'enlèvement de copeaux (210) et une arête de coupe secondaire (211) s'étendant sur des côtés opposés d'une arête de coin (209), une arête de raclage principale (212) s'étendant entre l'arête de coin (209) et l'arête de coupe principale (210), et une arête de raclage secondaire (213) s'étendant entre l'arête de coin (209) et l'arête de coupe secondaire (211),
où, selon une vue d'observation de dessus, l'arête de coupe principale (210) et l'arête de raclage principale (212) forment un angle intérieur obtus (λ) de moins de 180°,
où, selon une vue d'observation de dessus,
- l'arête de raclage principale (212) s'incline vers le bas depuis l'arête de coin (209) vers l'arête de coupe principale (210) ; et
- l'arête de coupe principale (210) présente une première partie (219) s'inclinant vers le bas depuis l'arête de raclage principale (212) et une seconde partie (220) qui s'étend parallèlement ou essentiellement parallèlement au plan d'extension supérieur (P_{U}),
***caractérisée en ce***
**que** le côté supérieur (202) comprend une surface de formation de copeaux (225) s'étendant à l'intérieur des arêtes de coupe (205) et s'inclinant vers le bas depuis celles-ci vers un niveau le plus bas de la surface de formation de copeaux (225), où une largeur de la surface de formation de copeaux (225) est plus large à l'intérieur des arêtes de coin (209) qu'à l'intérieur des arêtes de coupe principales (210).

2. Plaquette de coupe selon la revendication 1, dans laquelle, selon une vue d'observation de dessus, l'arête de raclage principale (212) et l'arête de raclage secondaire (213) forment un angle intérieur (α) de plus de 90°.

3. Plaquette de coupe selon la revendication 1 ou 2, dans laquelle, selon une vue d'observation de dessus, l'arête de coupe principale (210) et l'arête de coupe secondaire (211) forment un angle intérieur aigu (β), de préférence de moins de 85°.

4. Plaquette de coupe selon l'une quelconque des revendications précédentes, dans laquelle, selon une vue d'observation de côté, l'arête de raclage principale (212) présente une forme linéaire ou concave.

5. Plaquette de coupe selon l'une quelconque des revendications précédentes, dans laquelle les surfaces de dépouille (215, 216, 217, 218) s'étendant depuis et sous l'arête de coupe principale (210), l'arête de coupe secondaire (211), l'arête de raclage principale (212) et l'arête de raclage secondaire (213), respectivement, sont des surfaces planes s'étendant parallèlement à l'axe central (C2).

6. Plaquette de coupe selon l'une quelconque des revendications précédentes, dans laquelle l'arête de coin (209) présente une partie s'inclinant vers le bas de telle sorte qu'une transition régulière est formée entre l'arête de coin (209) et l'arête de raclage principale (212) selon une vue d'observation de côté.

7. Plaquette de coupe selon l'une quelconque des revendications précédentes, dans laquelle, selon une vue d'observation de côté, l'arête de raclage principale (212) et le plan d'extension supérieur (P_{U}) forment un angle compris entre 10° et 20°.

8. Plaquette de coupe selon l'une quelconque des revendications précédentes, dans laquelle ladite première partie (219) de l'arête de coupe principale (210) s'étend selon le même angle par rapport au plan d'extension supérieur (P_{U}) que l'arête de raclage principale (212).

9. Plaquette de coupe selon l'une quelconque des revendications précédentes, dans laquelle, selon une vue d'observation de dessus, l'arête de coupe secondaire (211) et l'arête de raclage secondaire (213) forment un angle intérieur obtus (ϕ) de moins de 180°.

10. Plaquette de coupe selon l'une quelconque des revendications précédentes, dans laquelle l'arête de raclage secondaire (213) s'étend parallèlement ou essentiellement parallèlement au plan d'extension supérieur (P_{U}), de préférence où l'arête de coupe secondaire (211) s'étend parallèlement ou essentiellement parallèlement au plan d'extension supérieur (P_{U}).

11. Plaquette de coupe selon l'une quelconque des revendications 1 à 9, dans laquelle l'arête de raclage secondaire (213) s'incline vers le bas depuis l'arête de coin (209) vers l'arête de coupe secondaire (211), de préférence où l'arête de coupe secondaire (211), selon une vue d'observation de côté, présente une première partie (228) s'inclinant vers le bas depuis l'arête de raclage secondaire (213), et une seconde partie (229) qui s'étend parallèlement ou essentiellement parallèlement au plan d'extension supérieur (P_{U}).

12. Plaquette de coupe selon l'une quelconque des revendications précédentes, dans laquelle le côté supérieur (202) comprend une surface de support supérieure (226) située au-dessus des arêtes de coupe (205).

13. Plaquette de coupe selon l'une quelconque des revendications précédentes, dans laquelle la largeur de la surface de formation de copeaux (225) diminue graduellement depuis une bissectrice de l'arête de coin (209) vers l'arête de coupe principale (210).

14. Plaquette de coupe selon l'une quelconque des revendications précédentes, où la plaquette de coupe (201) est réversible avec au moins deux arêtes de coupe inférieures identiques et utilisables en alternance (206) identiques aux arêtes de coupe supérieures correspondantes (205) s'étendant dans une transition entre la surface latérale (204) et le côté inférieur (203).

15. Outil de fraisage (1) configuré pour un usinage par enlèvement de copeaux comprenant un corps d'outil (101) incluant une extrémité avant (102) et une extrémité arrière (103), entre lesquelles s'étend un axe de rotation central (C1) autour duquel l'outil (1) peut être entraîné en rotation selon un sens de rotation (R), et au moins un siège de plaquette (105) étant ménagé dans une transition entre l'extrémité avant (102) et une surface d'enveloppe (104) s'étendant entre l'extrémité avant (102) et l'extrémité arrière (103) du corps d'outil (101), où une cavité à copeaux (106) est ménagée devant le au moins un siège de plaquette (105) selon le sens de rotation (R) de l'outil (1) ;
***caractérisé en ce***
**que** l'outil (1) comprend au moins une plaquette de coupe (201) selon l'une quelconque des revendications précédentes montée de manière amovible dans le au moins un siège de plaquette (105).
